(19) Europäisches Patentamt / European Patent Office / Office européen des brevets

(11) **EP 1 718 511 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: 05730391.9

(22) Anmeldetag: **16.02.2005**

(51) Int Cl.:
*B60W 30/18* (2012.01)      *F16H 61/02* (2006.01)
*B60W 10/02* (2006.01)      *B60W 10/10* (2012.01)

(86) Internationale Anmeldenummer:
**PCT/EP2005/001554**

(87) Internationale Veröffentlichungsnummer:
**WO 2005/080830 (01.09.2005 Gazette 2005/35)**

(54) **VERFAHREN ZUR BETÄTIGUNG MINDESTENS ZWEIER PARALLEL IM ANTRIEBSSTRANG EINES KRAFTFAHRZEUGS DREHMOMENT BERTRAGENDEN KUPPLUNGEN UND GETRIEBESTEUERUNG**

METHOD FOR THE ACTUATION OF AT LEAST TWO CLUTCHES TRANSMITTING TORQUE IN PARALLEL IN THE DRIVE TRAIN OF A MOTOR VEHICLE, AND TRANSMISSION CONTROL UNIT

PROCEDE POUR ACTIONNER AU MOINS DEUX ACCOUPLEMENTS TRANSMETTANT UN COUPLE EN PARALLELE DANS LA CHAINE CINEMATIQUE D'UN VEHICULE ET COMMANDE DE TRANSMISSION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.02.2004 DE 102004007840**

(43) Veröffentlichungstag der Anmeldung:
**08.11.2006 Patentblatt 2006/45**

(73) Patentinhaber: **Volkswagen Aktiengesellschaft 38440 Wolfsburg (DE)**

(72) Erfinder:
• **BOTHE, Edgar 31224 Peine (DE)**

• **SCHWENGER, Andreas 38446 Wolfsburg (DE)**
• **SCHREIBER, Wolfgang 38550 Isenbüttel (DE)**

(74) Vertreter: **Hübsch, Dirk Hübsch & Weil Patent- und Rechtsanwaltskanzlei Partnerschaft mbB Postfach 50 14 63 50974 Köln (DE)**

(56) Entgegenhaltungen:
**EP-A- 1 072 820      WO-A-03/074312**
**WO-A-03/074908      DE-A1- 10 156 940**

**Beschreibung**

Die Erfindung betrifft ein Verfahren, wie bekannt aus DE 101 56 940 A, zur Betätigung zweier parallel im Antriebsstrang eines Kraftfahrzeugs drehmomentübertragenden Kupplungen gemäß dem Oberbegriff der Patent-Anspruches 1 und eine Getriebesteuerung gemäß dem Oberbegriff des Patentanspruches 11 zur Durchführung des Verfahrens.

Bei Automatikgetrieben nach dem Stand der Technik ist dem eigentlichen Getriebe ein hydrodynamischer Drehmomentenwandler vorgeschaltet. Im Gegensatz zur Kupplung werden beim Wandler sowohl die Drehzahl, als auch das Drehmoment gewandelt. Das Momentenwandlungsverhältnis $\mu$ ist dabei durch die Schaufelgeometrie fest vorgegeben, kann nicht variiert werden und ist eine Funktion des Drehzahlverhältnisses $v = \omega1/\omega2$. Die nachfolgende Getriebeeinheit, z. B. ausgeführt in Form eines Planetengetriebes oder eines Vorgelegegetriebes mit Synchronisierungseinheiten, besitzt die Möglichkeit, zwischen unterschiedlichen Übersetzungsstufen zu wählen und einzustellen. Bei zugkraftunterbrechungsfreien Stufenautomatikgetrieben, z.B. beim klassischen Stufenautomat, wird im normalen Fahrbetrieb der Kraftschluss über eine oder mehrere aktiv angesteuerte Kupplungen/Bremsen im Antriebsstrang hergestellt, die entweder schon zu Beginn der Anfahrt geschlossen oder aber in sehr kurzer Zeit danach geschlossen wird, sogenanntes "Stand By Control". Durch die geschlossenen Kupplungen/Bremsen ist sowohl das Drehmomentenverhältnis als auch die Drehzahlübersetzung fest vorgegeben. Im Allgemeinen befinden sich die Kupplungen/Bremsen im Getriebe während einer Anfahrt und außerhalb der Gangwechsel während der Fahrt im schlupffreien Zustand. Das Drehmomentenverhältnis des Antriebsstranges ist abhängig von den aktuellen Drehzahlen und der Auslegung des Wandlers. Bei neueren Getriebeentwicklungen entfällt zum Teil der Wandler. In diesem Fall ist die Drehmomentenübersetzung fest durch die Getriebeübersetzung festgelegt und kann nicht variiert werden.

Es sind weiterhin Reibkupplungsgetriebe mit mehreren Teilgetrieben bekannt (DE 35 43 498 A1). Hierbei werden mit Hilfe mehrerer Kupplungen Teilgetriebe zu Getriebeübersetzungsstufen bzw. Gangstufen kombiniert.

Die DE 199 39 334 A1 beispielsweise schlägt die Anpassung der Motordrehzahl an die Kupplungsdrehzahl vor dem Eingreifen einer Kupplung eines Doppelkupplungsgetriebes vor.

In Fachkreisen wird diskutiert, in einem Stufenautomatgetriebe nur kurzzeitig zwei im Leistungsfluss parallel angeordnete Kupplungen aber auch nur während des Gangstufenwechsels für Zeiträume von unter 200 Millisekunden anzusteuern. Ziel ist es dabei, in möglichst kurzer Zeit die Drehzahlübersetzung zu ändern. Damit ist auch eine entsprechende kurzzeitige Drehmomentenübersetzungsänderung verbunden, die bei konstantem Eingangsmoment zu einer unerwünschten Abtriebsmomentenänderung führt. Dies kann unter ungünstigen Umständen aufgrund der sehr großen Übersetzungen in den "unteren Gängen" zu erheblichen Drehmomentensprüngen und damit auch zu Komforteinbußen führen. Weiterhin kann es bei den Antriebsrädern der Kraftfahrzeuge bei hohen Antriebsmomenten und niedrigen Reibwerten der Straße zu einem "Durchdrehen" der Räder bzw. zu einem Schlupfen der Räder kommen. Insbesondere ungünstige Fahrbahnbeläge wie auch Witterungsverhältnisse können das Durchdrehen der Räder bzw. Schlupfen der Räder - wie bereits oben erwähnt - verstärken.

Der Erfindung liegt daher die Aufgabe zugrunde, das eingangs genannte Verfahren bzw. die Getriebesteuerung derart auszugestalten und weiterzubilden, dass der Fahrkomfort verbessert ist, insbesondere die Wahrscheinlichkeit für das Durchdrehen der Antriebsräder bzw. das Schlupfen der Antriebsräder - vorzugsweise bei einem Beschleunigungsvorgang wie beispielsweise dem Anfahrvorgang - des Kraftfahrzeuges für den Fahrer eines Kraftfahrzeuges spürbar reduziert ist.

Diese zuvor aufgezeigte Aufgabe wird nun durch die Kombination der Merkmale der Patentansprüche 1 bzw. 11 gelöst. Weiterhin wird die zuvor gezeigte Aufgabe bei der Getriebesteuerung nunmehr dadurch gelöst, dass die Getriebesteuerung Mittel aufweist zur Ansteuerung beider Kupplungen derart, dass beide Kupplungen nicht nur zum Zwecke des Gangstufenwechsels, sondern auch für verschiedene vom Fahrer vorgegebene und/oder durch eine Sensorik erfasste Fahrsituationen gleichzeitig Drehmomente übertragen und so kontinuierlich eine resultierende Drehmomentenübersetzung zwischen der Antriebswelle und der Abtriebswelle realisiert wird. Auch ohne unmittelbare Gangwechselabsicht wird also ein Parallelbetrieb der Kupplungen realisiert, um im Sinne der Aufgabenstellung für den Fahrer zu Fahrresultaten zu gelangen, die seinen Wünschen entsprechen. Der Parallelbetrieb der Kupplungen ohne Vollzug eines Gangwechsels kann somit ohne Beschränkung auf Anfahrvorgänge in Beschleunigungsphasen bewusst länger sein als Zeiträume von 200 Millisekunden, also 300 Millisekunden und deutlich darüber hinaus.

Ein Grundgedanke der vorliegenden Erfindung ist, vorzugsweise eine kontinuierlich einstellbare Drehmomentenübersetzung bereitzustellen, die vorzugsweise zwischen den Drehmomentenübersetzungen zweier Getriebeübersetzungsstufen, nämlich zweier eingelegter Gangstufen liegt. Mithilfe der gleichzeitigen Betätigung zweier parallel im Antriebsstrang eines Kraftfahrzeugs drehmomentübertragenden Kupplungen mit jeweils unterschiedlichen folgenden fixen Drehzahlübersetzungen kann kontinuierlich eine variable Drehmomentenübersetzung eingestellt werden. Dies ermöglicht erfindungsgemäß, vorzugsweise das Drehmomentenverhältnis i_T explizit durch Steuerungsfunktionen einzustellen. Die Drehmomente können abtriebsseitig ohne eine Veränderung des Eingangsmoments, also zunächst ohne eine Veränderung des Motordrehmomentes variiert werden, insbesondere kann dies mit der Dynamik der Stellglieder erfolgen. Dies kann insbesondere bei einem Beschleunigungsvorgang oder dem Anfahrvorgang des Kraftfahrzeuges erfolgen. Ein weiterer Grundgedanke der Erfindung liegt daher darin beim Anfahrvorgang des Kraftfahrzeuges zur Regelung der Drehzahl an der Antriebswelle und/oder zur Regelung des Abtriebsmomentes in dem vorgesehenen Regelkreis die Kupplungskapazität der jeweiligen Kupplung als Stellgröße zu verwenden, vorzugsweise dass im Endeffekt gesamt zu übertragende Drehmoment auf die beiden jeweiligen Kupplungen so aufzuteilen und zu regeln, dass ein optimaler Beschleunigungs- oder Anfahrvorgang gewährleistet ist.

Es gibt nun unterschiedliche Möglichkeiten, das erfindungsgemäße Verfahren bzw. die erfindungsgemäße Getriebesteuerung in vorteilhafter Art und Weise auszugestalten und weiterzubilden. Hierfür darf zunächst auf die dem Patentanspruch 1 bzw. dem Patentanspruch 11 nachgeordneten Patentansprüche verwiesen werden. Im folgenden soll nun eine bevorzugte Ausführungsform der Erfindung anhand der nachfolgenden Beschreibung und der dazugehörenden Zeichnung näher erläutert werden. In der Zeichnung zeigt

Fig. 1     einen erfindungsgemäß gesteuerten Antriebsstrang eines Kraftfahrzeuges mit einem Doppelkupplungsgetriebe in schematischer Darstellung, nämlich ein schematisches Ersatz-Schaltbild,

Fig. 2a     die Drehzahlen über der Zeit t für bestimmte Drehzahlübersetzungen I1 bis I4 in schematischer Darstellung,

Fig. 2b     die Drehzahl an der Abtriebswelle in schematischer Darstellung über der Zeit t, und

Fig. 2c     in schematischer Darstellung die erfindungsgemäße Steuerung der Drehmomentübersetzung I_T des Gesamtgetriebes über der Zeit t.

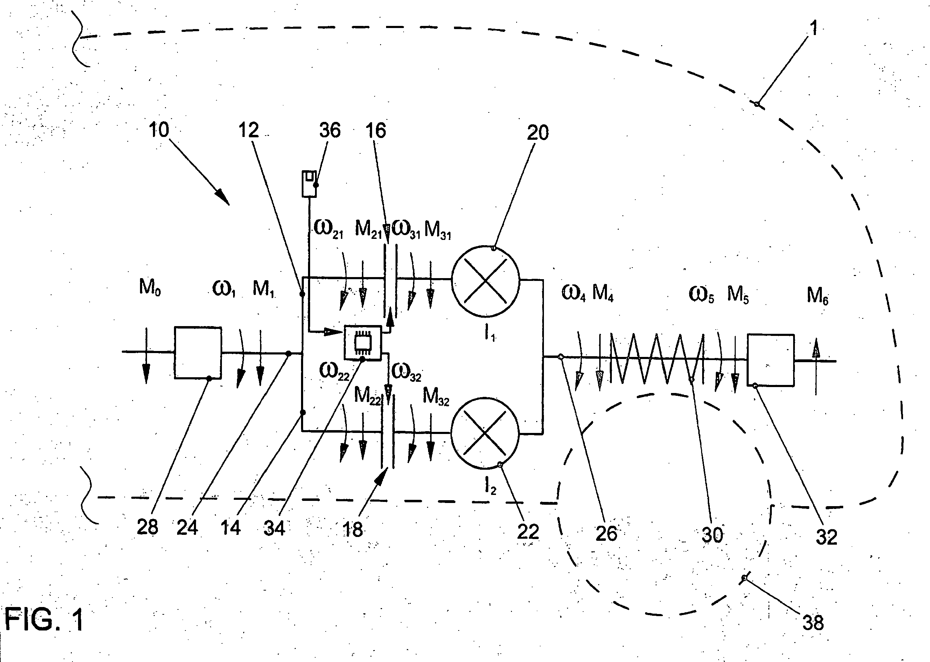

In der Zeichnung zeigt Fig. 1 für ein nur in Umrissen eines Endbereiches angedeutetes Kraftfahrzeug 1 einen erfindungsgemäß gesteuerten Antriebsstrang 10 mit einem Doppelkupplungsgetriebe in schematischer Darstellung, nämlich ein schematisches Ersatz-Schaltbild.

Fig. 1 zeigt einen Antriebsstrang 10 zur Anwendung des Verfahrens zur gleichzeitigen Betätigung zweier in parallelen Teilsträngen 12, 14 im Antriebsstrang eines Kraftfahrzeugs drehmomentübertragenden Kupplungen 16, 18 mit jeweils unterschiedlichen folgenden fixen Drehzahlübersetzungen I1 und I2, bei in den Teilsträngen 12,14 eingelegten Gangstufen 20 bzw. 22 zwischen einer Antriebswelle 24 und einer Abtriebswelle 26. Im Antriebsstrang 10 sind weiterhin ein Motor 28, eine Steifigkeit 30 des Antriebsstrangs 10 und der Abtrieb 32 dargestellt. Letzterer führt in einem Vorderachs-, Hinterachs- oder Allradantriebskonzeptes zu wenigstens einem Rad 38 des Kraftfahrzeugs 1, das der Übersichtlichkeit halber in dieser Ansicht allein ohne übrige Räder des Fahrzeugs dargestellt ist. Das in Fig. 1 dargestellte Bild zeigt im wesentlichen schematisch vorzugsweise ein funktionierendes Doppelkupplungsgetriebe.

Entlang des Antriebsstrangs 10 sind auch in beiden Teilsträngen 12,14 am Anfang, Ende und zwischen jeweils zwei Elementen gerade Pfeile eingezeichnet, die ein Drehmoment M an der jeweiligen Position kennzeichnen. Weiterhin sind zwischen jeweils zwei Elementen gebogene Pfeile eingezeichnet, die eine Drehzahl ω an der jeweiligen Position kennzeichnen. Im einzelnen symbolisieren

M0     das Motordrehmoment,
M1     das Drehmoment an der Antriebswelle 24 ,
M21     das Drehmoment zwischen der Antriebswelle 24 und der Kupplung 16 des ersten Teilstrangs 12,
M22     das Drehmoment zwischen der Antriebswelle 24 und der Kupplung 18 des zweiten Teilstrangs 14,
M31     das Drehmoment zwischen der Kupplung 16 und der Drehzahlübersetzung I1 bzw. der eingelegten Gangstufe 20 des ersten Teilstrangs 12,
M32     das Drehmoment zwischen der Kupplung 18 und der Drehzahlübersetzung I2 bzw. der eingelegten Gangstufe 22 des zweiten Teilstrangs 14,
M4     das Drehmoment an der Abtriebswelle 26
M5     das Drehmoment an der Abtriebswelle 26 nach Berücksichtigung der Steifigkeit 30 des Antriebsstrangs 10,
M6     das Abtriebsdrehmoment,
ω1     die Drehzahl an der Antriebswelle 24 ,
ω21     die Drehzahl zwischen Antriebswelle 24 und Kupplung 16 des ersten Teilstrangs 12,
ω22     die Drehzahl zwischen der Antriebswelle 24 und der Kupplung 18 des zweiten Teilstrangs 14,
ω31     die Drehzahl zwischen der Kupplung 16 und der Drehzahlübersetzung I1 bzw. der eingelegten Gangstufe 20 des ersten Teilstrangs 12,
ω32     die Drehzahl zwischen der Kupplung 18 und der Drehzahlübersetzung I2 bzw. der eingelegten Gangstufe 22 des zweiten Teilstrangs 14,
ω4     die Drehzahl an der Abtriebswelle 26,
ω5     die Drehzahl an der Abtriebswelle 26 nach Berücksichtigung der Steifigkeit 30 des Antriebsstrangs 10.

Befinden sich mehr als eine Kupplung, nämlich vorzugsweise bei einem Doppelkupplungsgetriebe zwei Kupplungen 16 und 18 parallel im Leistungspfad des Antriebsstrangs 10, kann dies durch das in Fig. 1 dargestellte Ersatzschaltbild wiedergeben werden. Das den Motordrehzahlgradienten beeinflussende Moment M1 setzt sich wie folgt zusammen:

$$M1 = M21 + M22$$

Das Abtriebsmoment ist über die Übersetzungen I1 und I2 wie folgt definiert:

$$M4 = M31 \cdot I1 + M32 \cdot I2.$$

Für Kupplungen in Schlupf gelten die Kapazitätsbedingungen:

$$M31 = M21 \text{ und } M32 = M22$$

Führt man einen Kapazitätsverteilungsfaktor K ein, der angibt zu welchem Prozentsatz sich das Drehmoment M1 aus den Kapazitäten M21 und M22 zusammensetzt ergibt sich:

$$M1 = (1 - K) \cdot M1 + K \cdot M1 \qquad \text{mit } 0 \le K \le 1.$$

Das Abtriebsmoment M4 ergibt sich dann in Abhängigkeit von K zu

$$M4 = (1-K) \cdot M1 \cdot I1 + K \cdot M1 \cdot I2.$$

Daraus folgt eine stufenlose Einstellmöglichkeit des Abtriebsmomentes M4 innerhalb der Grenzen:

$$M4\_min \ (|K = 1) = M1 \cdot I2 < M4 < M1 \cdot I1 = M4\_max \ (|K=0) \text{ für } I1 > I2.$$

Die fiktive Drehmomentenübersetzung I_T des Gesamtgetriebes ergibt sich zu

$$I\_T \ (K) = M4 \ / \ M1 = (1 - K) \cdot I1 + K \cdot I2.$$

Die Inverse beschreibt den Kapazitätsverteilungsfaktor K als Funktion des gewünschten Drehmomentenübersetzungsverhältnisses i_T:

$$K(I\_T) = (I1 - I\_T) \ / \ (I1 - I2).$$

Die Drehzahlübersetzung I_n des Getriebes mit schlupfenden Kupplungen ist wie folgt definiert:

$$I\_n = \omega 1 \ / \ \omega 4$$

Die effektive Drehzahlübersetzung kann durch Regelung der Wellendrehzahl mit Hilfe des effektiven Kupplungsmomentes M1 nachgeführt werden.

Ebenfalls schematisch dargestellt ist hier ein Steuergerät 34, das entsprechende elektronische und/oder elektrische Komponenten, insbesondere einen Mikroprozessor aufweist. Dem Steuergerät 34 werden von einer ebenfalls nur schematisch dargestellten Sensorik 36 (dazu können beispielsweise Raddrehzahlsensoren, Fahrpedalstellungssensoren, Fahrgeschwindigkeitsmesser, Beschleunigungssensoren, Neigungssensoren und vieles andere mehr gehören) alle entsprechenden Fahrparameter, die zur der Ermittlung der verschiedenen Werte nötig sind, über entsprechende Steuer-/ Signalleitungen zugeführt, wobei das Steuergerät 34 dann die entsprechenden von ihm zu ermittelnden Werte entsprechend bestimmt und die Kupplungen 16 und 18, d.h. die insbesondere hydraulisch aktivierbaren Aktuatoren dieser Kupplungen entsprechend ansteuert, damit innerhalb der Kupplung 16 und 18 die entsprechenden Anpresskräfte realisiert werden können, insbesondere eine aufeinander abgestimmte Ansteuerung der Kupplungen 16 und 18, vorzugsweise eine jeweils abgestimmte einzelne Schlupfregelung jeder Kupplung 16 bzw. 18 erfolgen kann.

Im folgenden sollen einige spezifische Anwendungsfälle näher beschrieben werden:

Zunächst liegt einer der Grundgedanken der Erfindung darin, dass bei bestimmten Beschleunigungsvorgängen und insbesondere beim Anfahrvorgang des Kraftfahrzeuges die Kupplungen 16, 18 derart angesteuert werden, dass beide Kupplungen 16, 18 gleichzeitig Drehmomente übertragen und kontinuierlich eine resultierende Drehmomentübersetzung zwischen der Antriebswelle 24 und der Abtriebswelle 26 realisiert wird. Hierbei ist während des gesamten Anfahrvorganges die Drehzahl $\omega_1$ der Antriebswelle 24 größer als die jeweilige Drehzahl $\omega_{31}$ bzw. $\omega_{32}$ der jeweiligen Getriebeeingangswelle des jeweiligen Teilstranges 12 bzw. 14 an der Sekundärseite der jeweiligen Kupplung 16, 18. Während eines Beschleunigungsvorganges in höheren Gangstufen ist die Drehzahl $\omega_1$ der Antriebswelle 24 größer -oder gleich der jeweiligen Drehzahl $\omega_{31}$ bzw. $\omega_{32}$ der jeweiligen Getriebeeingangswelle des jeweiligen Teilstranges 12 bzw. 14 an der Sekundärseite der jeweiligen Kupplung 16, 18. Hierdurch kann ein optimaler Anfahr- bzw. Beschleunigungsvorgang eines Kraftfahrzeuges realisiert werden, insbesondere kontinuierlich eine resultierende Drehmomentübersetzung zwischen der Antriebswelle 24 und der Abtriebswelle 26 realisiert werden, was den Fahrkomfort entsprechend erhöht.

Unter dem Begriff "Anfahrvorgang" wird vorzugsweise eine Beschleunigung des stehenden oder rollenden Kraftfahrzeugs (also Fahrgeschwindigkeit $v \leq 10$ km/h) verstanden. Beim "Anfahrvorgang" sind daher die Drehzahlen $\omega_{31}$ bzw. $\omega_{32}$ der jeweiligen Getriebeeingangswelle geringer als die Drehzahl $\omega_1$ der Antriebswelle 24. Der Anfahrvorgang ist vorzugsweise dann abgeschlossen, wenn die Übertragung des Drehmomentes nur noch über eine der beiden Kupplungen 16 bzw. 18 erfolgt und der Schlupf in dieser Kupplung 16 bzw. 18 im wesentlichen abgebaut ist. Als Beschleunigungsvorgänge werden aber beispielsweise auch solche Fahrsituationen angesehen, bei denen ein Fahrer beispielsweise nach Verlassen einer Ortschaft die Fahrgeschwindigkeit von 50 km/h auf landstraßenübliche 80 km/h bis 100 km/h erhöhen möchte.

Ein weiterer Grundgedanke der Erfindung liegt also im wesentlichen auch darin, dass beim Beschleunigungsvorgang und insbesondere beim Anfahrvorgang des Kraftfahrzeuges zur Regelung der Drehzahl $\omega_1$ an der Antriebswelle 24 und/oder zur Regelung des Abtriebsmomentes M4 in dem vorgesehenen Regelkreis die Kupplungskapazität der jeweiligen Kupplung 16 bzw. 18 als Stellgröße verwendet wird. Dieses Grundprinzip geht daher dahin durch die Verwendung der Kupplungskapazitäten als Stellgröße einerseits die Motordrehzahl regeln zu können, andererseits auch das Abtriebsmoment regeln zu können, ohne das zwangsläufig damit eine Änderung der jeweils anderen Größe verbunden ist.

Mithilfe einer Regelung wird eine Gesamtkupplungskapazität berechnet. Die kann z.B. durch eine Folgeregelung der Motordrehzahl erfolgen. Das Abtriebsmoment kann dann durch eine gewünschte Drehmomentenübersetzung i_T nach obigen Formeln auf eine Kapazitatsverteilung der Kupplungen umgerechnet werden. Damit ist es möglich, sowohl eine Motordrehzahl einzuregeln, als auch das Abtriebsmoment innerhalb gewisser Grenzen hochdynamisch einzustellen.

Es ist also einerseits möglich, dass für eine vorgegebene Zeitspanne, deren Betrag sich entweder als Funktion eines Signals der Sensorik 36 und/oder aus einem im Steuergerät 34 abgelegten Kennfeld ergibt, der Anfahrvorgang im wesentlichen unter Beibehaltung des Abtriebsmomentes M4 erfolgt, nämlich die Drehzahl $\omega_1$ der Antriebswelle 24 bzw. des Motors 28 geregelt wird, ohne dass eine Änderung des Abtriebsmomentes M4 erfolgt. Der andere - oben bereits erwähnte - Fall ist, dass der Anfahrvorgang zumindest für einen vorgegebene Zeitspanne im wesentlichen unter Beibehaltung der Drehzahl $\omega_1$ der Antriebswelle 24 bzw. des Motors 28 erfolgt, nämlich das Abtriebsmoment M4 geregelt wird, ohne dass eine Änderung der Drehzahl $\omega_1$ der Antriebswelle 24 bzw. des Motors 28 erfolgt.

Der Faktor i_T kann hierbei als Maß für den Komfort bzw. für die Sportlichkeit dienen. Je größer i_T gewählt wird, desto direkter wirken sich Motordrehmomentenänderungen auf das Abtriebsmoment aus. Je kleiner der Faktor i_T ist, desto komfortabler werden Lastwechsel.

Ist der Reibwert zwischen Reifen und Fahrbahn für das aktuelle Abtriebsmoment der Räder nicht ausreichend, kommt es zu großen unerwünschten Schlupfwerten. Um diesem Zustand schnell entgegenwirken zu können, wird eine Reduktion der Drehmomentenübersetzung vorgeschlagen. Diese Maßnahme ist in vorteilhafter Weise im Hinblick auf die vom Fahrer erwarteten Dynamikansprüche günstiger als eine Motormomentenreduktion durch die Absenkung des Liefergrades von Kraftstoff-Luft-Gemisch (beispielsweise durch Verstellung der Drosselklappe bei konventionellen Ottomotoren) und auch besser als die in der Regel mit einer erhöhten Schadstoffbildung einhergehende Verstellung des Zündzeitpunktes.

Es kann über entsprechende Sensorik bzw. einen entsprechenden Regelkreis nun bei konstanter Drehzahl $\omega_1$ der Antriebswelle 24 bzw. des Motors 28 und bei konstanter Fahrpedalstellung ein variierendes Radmoment an mindestens einem Rad 38 des Kraftfahrzeuges ermittelt werden, vorzugsweise über entsprechende Drehzahlsensoren, so dass dieses Radmoment durch die Änderung des Abtriebsmomentes M4 an eine spezifische äußere Randbedingung dann angepasst werden kann. Hierdurch ist es daher möglich, dass Radmoment entsprechend zu verändern, um es den äußeren Randbedingungen anzupassen, beispielsweise an folgende spezifische Randbedingungen: an die Fahrbahnsteigung, an einem möglichen Gegenwind oder zum Einregeln einer definierten Geschwindigkeit des Kraftfahrzeuges. Vorzugsweise kann daher das Kraftfahrzeug mit konstanter Motordrehzahl aber variierenden Radmomenten an den Rädern betrieben werden, also vorzugsweise mit konstanter Fahrpedalstellung und konstanter Motordrehzahl (dies kann auch bedeuten, dass das Fahrpedal entlastet ist und der Motor im Leerlauf läuft).

Es ist auch denkbar, dass durchdrehende angetriebene Räder des Kraftfahrzeuges durch den Vergleich der Raddrehzahlen der angetriebenen Rädern mit den Raddrehzahlen der nicht angetriebenen Räder ermittelt werden oder auch beispielsweise durch den Vergleich der Raddrehzahlen mit einer aus einem Beschleunigungssensor ermittelten Referenzdrehzahl. Im Fall eines durch die Sensorik 36 ermittelten durchdrehenden Rades wird auf Veranlassung des Steuergerätes 34 das Abtriebsmoment M4 und damit dann auch das Radmoment des durchdrehenden Rades durch Eingriffe an den Kupplungen 16 und/oder 18 so lange verkleinert, bis der Schlupf des durchdrehenden Rades abgebaut ist. Zum Abbau des Schlupfes des durchdrehenden Rades werden die beiden Kupplungen 16 bzw. 18 derart eingestellt, dass eine Verlagerung des zu übertragenden Drehmomentes auf die jeweilige Kupplung 16 bzw. 18 des Teilstranges 12 bzw. 14 mit eingelegter höherer Gangstufe erfolgt. Hierbei muss das Motormoment nicht verändert werden. Grenze für dieses Verfahren ist, wenn selbst bei einer Anfahrt über den höheren der beteiligten Gänge ein Durchdrehen des Rades nicht verhindert werden kann. In diesem Fall kann dann auf der entlasteten Kupplung ein höherer Gang eingelegt werden.

Wird eine Anfahrt ausgeführt, kann sehr schnell zwischen extrem komfortablen Beschleunigungen, d.h. bei Wahl von I_T nahe I2 mit I1 > I2, oder sehr sportlichen Beschleunigungen, d.h. bei Wahl von I_T nahe I1 mit I1 > I2, umgeschaltet werden. Der Wechsel kann kontinuierlich oder diskret - sehr schnell erfolgen. Es ist aber auch möglich, mit einer konstanten I_T die Anfahrt durchzuführen.

In einem Mehrgrößenregelkreis kann das Drehmomentenübersetzungsverhältnis I_T oder der Kapazitätsverteilungsfaktor K als zusätzliche Regelgröße verwendet werden. So ist zum Beispiel vorstellbar, durch die Stellgrößen Motormoment M1 und durch die Kupplungskapazitäten gleichzeitig die Motordrehzahl n_Mot (vorzugsweise = $\omega1$), die Sportlichkeit als Funktion in I_T und das Abtriebsmoment M4 einzuregeln. Dieser Regelkreis führt zu einem geschlossenem Antriebsstrangmanagement.

Führt man das Drehmomentenübersetzungsverhältnis I_T so nach, dass bei Synchrondrehzahl einer Gangstufe die entsprechende Kupplung kein Moment mehr überträgt, kann zu diesem Zeitpunkt die nächste Gangstufe auf diesem Teilgetriebe eingelegt werden. Anschließend kann dann wieder kontinuierlich die Kapazität der jetzt aktiven Kupplung auf die neue Kupplung und damit die neue Gangstufe überführt werden. Dies führt zu kontinuierlichen Drehzahl- und Drehmomentenverläufen trotz diskreter Gangstufen.

Weitere vorteilhafte Ausgestaltungen der Erfindung basieren darauf, dass beide Kupplungen 16 und 18 gleichzeitig Drehmomente übertragen und kontinuierlich eine resultierende Drehmomentenübersetzung zwischen der Antriebswelle 24 und der Abtriebswelle 26 realisiert bzw. angewendet wird. Bei der Kombination dieses Verfahrens mit der bevorzugten Ausführungsform des Getriebes als Doppelkupplungsgetriebe weist der erste Teilstrang 12 eine erste Getriebeeingangswelle und der zweite Teilstrang 14 eine zweite Getriebeeingangswelle auf. Die Primärseiten der beiden Kupplungen 16 und 18 sind jeweils mit der Antriebswelle 24 vorzugsweise der Motorwelle verbunden. Sekundärseitig schließen sich an die beiden Kupplungen 16 und 18 eines Doppelkupplungsgetriebes dann jeweils die erste und zweite Getriebeeingangswelle an, wobei vorzugsweise der ersten Getriebeeingangswelle der erste, dritte, fünfte und vorzugsweise siebte Gang und der zweiten Getriebeeingangswelle der zweite, vierte und sechste Gang zugeordnet sind.

Grundsätzlich ist bei dem in Fig. 1 schematisch dargestellten Antriebsstrang 10 eines Doppelkupplungsgetriebes, also im ersten Teilstrang 12 eine bestimmte - erste - Gangstufe eingelegt und im zweiten Teilstrang 14 eine bestimmte - zweite - Gangstufe eingelegt. Da innerhalb des ersten Teilstranges 12 vorzugsweise hier der erste, dritte, fünfte und vorzugsweise auch der siebte Gang eines Doppelkupplungsgetriebes einlegbar ist, wobei im zweiten Teilstrang 14 des Doppelkupplungsgetriebes vorzugsweise der zweite, vierte und sechste Gang eines Doppelkupplungsgetriebes einlegbar ist, kann es sich grundsätzlich also bei der hier genannten "ersten Gangstufe" vorzugsweise um den ersten, dritten oder fünften Gang des Doppelkupplungsgetriebes handeln. Bei der "zweiten Gangstufe" kann es sich grundsätzlich um den zweiten, vierten oder sechsten Gang des Doppelkupplungsgetriebes handeln. Unterschiedliche Kombinationen sind hier möglich. Mit der Bezeichnung "erste Gangstufe" bzw. "zweite Gangstufe" soll verdeutlicht werden, dass unterschiedliche Gangstufen gemeint sind. Es ist daher abhängig vom jeweiligen Anwendungsfall eine bestimmte resultierende Drehmomentenübersetzung zwischen der Antriebswelle 24 und der Abtriebswelle 26 zu erzielen. Vorzugsweise ist aber bei Anfahrten des Kraftfahrzeuges im ersten Teilstrang 12 als erste Gangstufe der erste Gang und im zweiten Teilstrang 14 als zweite Gangstufe der zweite Gang entsprechend in den jeweiligen Teilsträngen 12 bzw. 14 eingelegt, so dass das erfindungsgemäße Verfahren entsprechend realisiert werden kann. So werden die beiden den Teilsträngen 12 bzw. 14 zugeordneten Kupplungen 16 und 18 entsprechend angesteuert, vorzugsweise entsprechend mit Hilfe des Steuergerätes 34 schlupfgeregelt, um die bestimmte resultierende Drehmomentenübersetzung zu realisieren.

Vorzugsweise erfolgt die Ansteuerung jeder der beiden Kupplungen über eine Kennlinie. Jede Kennlinie wird vorteilhaft unter Berücksichtigung aktueller Fahrparameter mit Hilfe des Steuergerätes 34 berechnet. Vorzugsweise kann auch eine gemeinsame Steuerung eines Motordrehmomentes und der resultierenden Drehmomentenübersetzung erfolgen.

Vorteilhaft liegt während der erfindungsgemäßen Ansteuerung der Kupplungen 16 bzw. 18 die resultierende Drehmomentenübersetzung zwischen der Antriebswelle 24 und der Abtriebswelle 26 vorzugsweise permanent zwischen der Drehmomentenübersetzung der in den jeweiligen Teilsträngen 12, 14 aktuell eingelegten bestimmten Gangstufen.

Das Verfahren enthält daher auch die Verfahrensschritte:

a) Einlegen einer bestimmten ersten Gangstufe im ersten Teilstrang 12 des Getriebes;
b) Einlegen einer bestimmten zweiten Gangstufe im zweiten Teilstrang 14 des Getriebes;
c) Koordiniertes Ansteuern der Kupplung 16, 18 derart, dass beide Kupplungen 16, 18 gleichzeitig Drehmomente übertragen und kontinuierlich eine resultierende Drehmomentenübersetzung zwischen der Antriebswelle 24 und der Abtriebswelle 26 realisiert wird;

Vorzugsweise ist daher die resultierende Drehmomentenübersetzung zwischen der Antriebswelle 24 und der Abtriebswelle 26 über die Ansteuerung der Kupplungen einstellbar.

Eine vorteilhafte Anwendung des Verfahrens ist die Vermeidung von unerwünschtem Radschlupf, wo bereits oben erläutert worden ist.

Eine Getriebesteuerung zum Durchführen des Verfahrens weist Mittel zur Ansteuerung beider Kupplungen 16, 18 derart auf, dass beide Kupplungen 16, 18, insbesondere gleichzeitig Drehmomente übertragen und kontinuierlich eine resultierende Drehmomentenübersetzung zwischen der Antriebswelle 24 und der Abtriebswelle 26 angewendet wird bzw. realisiert wird. In einer weiteren Ausführungsform ist vorgesehen, dass das Antriebsmoment, also das Motordrehmoment eingestellt werden kann. Dies führt insbesondere in den unteren Gangstufen, z.B. Anfahren zu einer zusätzlich erheblichen Komforterhöhung. Grundsätzlich aber gilt bei dem Verfahren, dass die Drehzahl der Motorwelle immer größer oder gleich den Drehzahlen der jeweiligen Getriebeeingangswelle der beiden Teilstränge 12 bzw. 14 ist.

Noch ein Vorteil ist, dass durch die Vorgabe des Drehmomentenübersetzungsverhältnisses über die Kapazitatsverteilung der aktiven Kupplungen 16 bzw. 18 mit der Dynamik der Stellglieder der Kupplungsansteuerungsstrecke das Abtriebsmoment und somit das Moment an den Rädern, also die Radmomente verändert werden können. Diese Radmomentenbeeinflussung ist wesentlich schneller als ein Motormomenteneingriff und kann daher zur Vermeidung von unerwünschten Radschlüpfen eingesetzt werden.

Weiterhin kann das Verfahren auch bei mehr als zwei parallelen Teil-Antriebssträngen entsprechend eingesetzt werden. Vorzugsweise eignet sich das geschilderte Verfahren jedoch für ein Doppelkupplungsgetriebe.

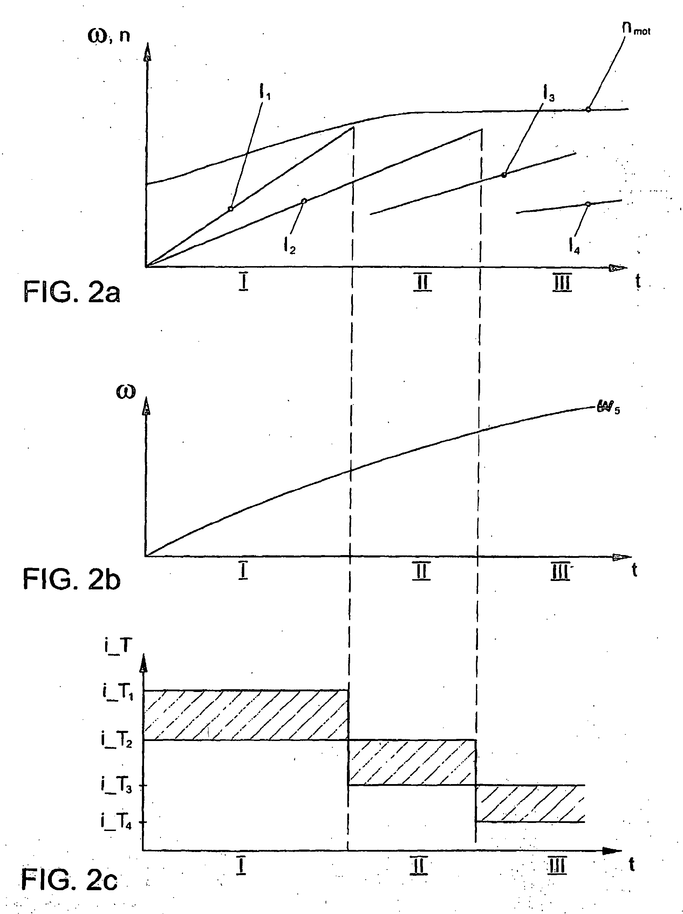

Die Fig. 2a bis 2c zeigen unterschiedliche Bereiche I, II bzw. III und für diese Bereiche unter bestimmten Bedingungen existierenden Drehzahlen ω bzw. in Fig. 2c die resultierende Drehmomentenübersetzung I_T. Zu den Fig. 2a bis 2c im einzelnen folgendes:

Die Fig. 2a zeigt in schematischer Darstellung über der Zeit t die entsprechenden Drehzahlen, nämlich die Motordrehzahl n_mot bzw. die Drehzahlen ω31 der ersten Getriebeeingangswelle des Doppelkupplungsgetriebes bzw. die Drehzahl ω32 der zweiten Getriebeeingangswelle des Doppelkupplungsgetriebes bei unterschiedlich eingelegten erste vier Gängen, nämlich bei den entsprechend eingelegten vier Gangstufen mit den hier dargestellten Übersetzungsverhältnisses I1, I2, I3 bzw. I4.

Die Fig. 2b zeigt die Abtriebsdrehzahl ω5 der Abtriebswelle 26 ebenfalls für die unterschiedlichen Bereiche I, II und III.

Schließlich zeigt die Fig. 2c entsprechende "schraffierte Bereiche" für den jeweiligen Bereich I, II und III. Es ist insbesondere in der Fig. 2c gut zu erkennen, dass die resultierende Drehmomentenübersetzung I_T immer liegen kann zwischen Grenzen für die spezifischen Drehmomentenübersetzungen der einzelnen Gangstufen bzw. jeweils eingelegten Gänge, nämlich zwischen $I\_T_1$ und $I\_T_2$ für den Bereich I, oder zwischen $I\_T_2$ und $I\_T_3$ für den Bereich II bzw. zwischen $I\_T_3$ und $I\_T_4$ für den Bereich III. Der in der Fig. 2c jeweilige "schraffierte Bereich" zeigt hier die mögliche Einstellung der resultierenden Drehmomentenübersetzung I_T. Das Verfahren wird daher derart angewendet, dass in einem Getriebe zumindest zwei unterschiedliche Gangstufen in unterschiedlichen Teilgetrieben eingelegt sind, wobei jeder Gangstufe mindestens eine Kupplung zugeordnet ist und die Kupplungen, entsprechend angesteuert werden. Hierbei sind die Kupplungen aber derart aktiviert bzw. werden derart angesteuert, dass die Kupplungen gleichzeitig jeweils bestimmte Drehmomente übertragen und hierbei kontinuierlich eine resultierende Drehmomentenübersetzung zwischen der Antriebswelle und der Abtriebswelle des Getriebes, vorzugsweise des Doppelkupplungsgetriebes realisiert wird. Mit dem Wort "kontinuierlich" ist hierbei eine Drehmomentenübersetzung gemeint, die nicht abreißt, sondern eben kontinuierlich über den entsprechenden Zeitraum der Betätigung der Kupplungen entsprechend realisiert wird, vorzugsweise zu einem hohen Fahrkomfort führt.

**BEZUGSZEICHENLISTE**

| | |
|---|---|
| Kraftfahrzeug | 1 |
| Antriebsstrang | 10 |
| parallelen Teilstränge | 12, 14 |
| Kupplungen | 16, 18 |
| Gangstufen | 20, 22 |
| Antriebswelle | 24 |
| Abtriebswelle | 26 |
| Motor | 28 |
| Steifigkeit | 30 |
| Abtrieb | 32 |
| Steuergerät | 34 |
| Sensorik | 36 |
| Rad | 38 |

**Patentansprüche**

1. Verfahren zur Betätigung mindestens zweier parallel im Antriebsstrang (10) eines Kraftfahrzeugs drehmomentübertragenden Kupplungen (16, 18) mit jeweils unterschiedlichen fixen Drehzahlübersetzungen (I1, I2) als Gangstufen (20, 22) zwischen einer Antriebswelle (24) und einer Abtriebswelle (26), wobei bei einem Beschleunigungsvorgang, insbesondere einem Anfahrvorgang, des Kraftfahrzeuges die beiden Kupplungen (16, 18) derart angesteuert werden, dass beide Kupplungen (16, 18) gleichzeitig Drehmomente übertragen und kontinuierlich eine resultierende Drehmomentenübersetzung zwischen der Antriebswelle (24) und der Abtriebswelle (26) realisiert wird, wobei während des gesamten Anfahrvorganges die Drehzahl ($\omega$1) der Antriebswelle (24) größer ist als die jeweilige Drehzahl ($\omega$31 oder $\omega$32) der jeweiligen Getriebeeingangswelle des jeweiligen Teilstranges (12, 14) an der Sekundärseite der jeweiligen Kupplung (16, 18) oder während eines Beschleunigungsvorganges die Drehzahl ($\omega$1) der Antriebswelle (24) größer oder gleich der jeweiligen Drehzahl ($\omega$31 oder $\omega$32) der jeweiligen Getriebeeingangswelle des jeweiligen Teilstranges (12, 14) an der Sekundärseite der jeweiligen Kupplung (16, 18) ist, wobei die resultierende Drehmomentenübersetzung als eine einstellbare Drehmomentenübersetzung bereitgestellt wird und das Drehmomentenverhältnis über Steuerungsfunktionen einstellbar ist, wobei bei einem Beschleunigungsvorgang, insbesondere einem Anfahrvorgang des Kraftfahrzeuges zur Regelung der Drehzahl ($\omega$1) an der Antriebswelle (24) und/oder zur Regelung des Abtriebsmomentes (M4) in dem vorgesehenen Regelkreis die Kupplungskapazität der jeweiligen Kupplung (16, 18) als Stellgröße verwendet wird, um einerseits die Motordrehzahl und andererseits das Abtriebsmoment regeln zu können, ohne dass zwangsläufig damit eine Änderung der jeweils anderen Größe verbunden ist, nämlich dass zumindest für eine vorgegebene Zeitspanne der Vorgang im wesentlichen unter Beibehaltung des Abtriebsmomentes (M4) erfolgt, nämlich die Drehzahl ($\omega$1) der Antriebswelle (24) bzw. des Motors (28) geregelt wird, ohne dass eine Änderung des Abtriebsmomentes (M4) erfolgt, **dadurch gekennzeichnet, dass** das Drehmomentenverhältnis so nachgeführt wird, dass bei Synchrondrehzahl einer Gangstufe (20 bzw. 22) die entsprechende Kupplung (16 bzw. 18) kein Drehmoment mehr überträgt und zu diesem Zeitpunkt die nächste Gangstufe auf diesem Teilgetriebe eingelegt werden kann, wobei anschließend dann wieder kontinuierlich die Kapazität der aktiven Kupplung (16 bzw. 18) auf die andere Kupplung (16 bzw. 18) und damit auf die neue Gangstufe überführt wird.

2. Verfahren nach Anspruch 1 **dadurch gekennzeichnet, dass** der Anfahrvorgang im wesentlichen unter Beibehaltung des Motordrehmomentes erfolgt.

3. Verfahren nach einem der Ansprüche 1 bis 2 **dadurch gekennzeichnet, dass** *als* Zeitraum zur Anwendung des Verfahrens eine Zeitspanne von mindestens 300 ms vorgesehen ist.

4. Verfahren nach einem der vorstehenden Ansprüche, **dadurch gekennzeichnet, dass** die Ansteuerung jeder der beiden Kupplungen (16, 18) mit Hilfe eines Steuergerätes (34) realisiert wird.

5. Verfahren nach einem der vorherstehenden Ansprüche, **dadurch gekennzeichnet, dass** die Ansteuerung jeder der beiden Kupplungen (16, 18) über eine Kennlinie erfolgt und jede Kennlinie unter Berücksichtigung aktueller Fahrparameter berechnet wird.

6. Verfahren nach einem der Ansprüche 4 oder 5, **dadurch gekennzeichnet, dass** eine gemeinsame Steuerung des Motordrehmomentes und der resultierenden Drehmomentenübersetzung mit Hilfe des Steuergerätes (34) realisiert wird.

7. Verfahren nach einem der vorstehenden Ansprüche, **dadurch gekennzeichnet, dass** die resultierende Drehmomentenübersetzung zwischen der Antriebswelle (24) und der Abtriebswelle (26) zwischen der Drehmomentenübersetzung des ersten Teilstranges (12) und der Drehmomentenübersetzung des zweiten Teilstranges (14) liegt.

8. Verfahren nach einem der vorstehenden Ansprüche, **gekennzeichnet durch** die Verfahrensschritte

   a) Einlegen einer bestimmen ersten Gangstufe im ersten Teilstrang (12) des Getriebes;
   b) Einlegen einer bestimmten zweiten Gangstufe im zweiten Teilstrang (14) des Getriebes;
   c) Koordiniertes Ansteuern der Kupplungen (16, 18) derart, dass die Kupplungen (16, 18) gleichzeitig Drehmomente übertragen und kontinuierlich eine resultierende Drehmomentenübersetzung zwischen der Antriebswelle (24) und der Abtriebswelle (26) realisiert wird.

9. Verfahren nach einem der vorstehenden Ansprüche, **dadurch gekennzeichnet, dass** die resultierende Drehmomentenübersetzung einer resultierenden Drehzahlübersetzung zwischen der Antriebswelle (24) und der Abtriebswelle (26) entspricht, die über die Ansteuerung der Kupplungen (16, 18) mit Hilfe des Steuergerätes (34) unter Berücksichtigung aktueller Fahrparameter einstellbar ist.

10. Verfahren nach einem der vorstehenden Ansprüche, **dadurch gekennzeichnet, dass** eine bestimmte resultierende Drehmomentenübersetzung zur Vermeidung von unerwünschtem Radschlupf realisiert wird.

11. Getriebesteuerung zur Betätigung zweier parallel im Antriebsstrang eines Kraftfahrzeugs (1) drehmomentübertragenden Kupplungen (16, 18) mit jeweils unterschiedlichen folgenden fixen Drehzahlübersetzungen als Gangstufen zwischen einer Antriebswelle (24) und einer Abtriebswelle (26) bei einem Beschleunigungsvorgang, insbesondere einem Anfahrvorgang des Kraftfahrzeuges (1), wobei das Verfahren nach einem der Ansprüche 1 bis 10 durchgeführt wird, **dadurch gekennzeichnet, dass** die Getriebesteuerung Mittel aufweist zur Ansteuerung beider Kupplungen (16, 18) derart, dass beide Kupplungen (16, 18) gleichzeitig Drehmomente übertragen und so kontinuierlich eine resultierende Drehmomentenübersetzung zwischen der Antriebswelle (24) und der Abtriebswelle (26) realisiert wird.

12. Getriebesteuerung nach Anspruch 11 **dadurch gekennzeichnet, dass** als Zeitraum für die Anwendung der resultierenden Drehmomentübersetzung eine Zeitspanne von mindestens 300 ms vorgesehen ist.

## Claims

1. Method for the actuation of at least two clutches (16, 18) transmitting torque in parallel in the drive train (10) of a motor vehicle and having in each case different fixed rotational speed ratios (11, 12) as gear steps (20, 22) between a drive shaft (24) and an output shaft (26), wherein, during an acceleration operation, in particular a starting operation, of the motor vehicle, the two clutches (16, 18) are activated in such a way that the two clutches (16, 18) transfer torques simultaneously and a resulting torque ratio between the drive shaft (24) and the output shaft (26) is implemented continuously, the rotational speed ($\omega1$) of the drive shaft (24) being higher during the entire starting operation than the respective rotational speed ($\omega31$ or $\omega32$) of the respective transmission input shaft of the respective part train (12, 14) on the secondary side of the respective clutch (16, 18), or, during an acceleration operation, the rotational speed ($\omega1$) of the drive shaft (24) being higher than or equal to the respective rotational speed ($\omega31$ or $\omega32$) of the respective transmission input shaft of the respective part train (12, 14) on the secondary side of the respective clutch (16, 18), wherein the resulting torque ratio is provided as an adjustable torque ratio and the torque ratio can be set by means of control functions, wherein, during an acceleration operation, in particular a starting operation, of the motor vehicle, the clutch capacity of the respective clutch (16, 18) is used as a manipulated variable for regulating the rotational speed ($\omega1$) at the drive shaft (24) and/or for regulating the output torque (M4) in the control circuit provided, in order to be able to regulate, on the one hand, the engine rotational speed and, on the other hand, the output torque, without this necessarily entailing a change in the other variable in each case, to be precise in that, at least for a predetermined timespan, the starting operation takes place essentially with the output torque (M4) being maintained, to be precise the rotational speed ($\omega1$) of the drive shaft (24) or of the engine (28) is regulated, without a change in the output torque (M4) taking place, **characterized in that**, the torque ratio is tracked such that at a synchronous rotational speed of a gear step (20 and 22) the corresponding clutch (16 and 18) no longer transfers torque and the next gear step on this part transmission can be selected at this time point, wherein subsequently, the capacity of the active clutch (16 and 18) is then transferred continuously again to the other clutch (16 and 18) and consequently the new gear step.

2. Method according to Claim 1, **characterized in that** the starting operation takes place essentially with the engine torque being maintained.

3. Method according to either one of Claims 1 and 2, **characterized in that** the period of time provided for applying the method is a timespan of at least 300 ms.

4. Method according to one of the preceding claims, **characterized in that** the activation of each of the two clutches (16, 18) is implemented with the aid of a control unit (34).

5. Method according to one of the preceding claims, **characterized in that** the activation of each of the two clutches (16, 18) takes place via a characteristic curve, and each characteristic curve is calculated, taking into account current driving parameters.

6. Method according to either one of Claims 4 and 5, **characterized in that** a common control of the engine torque and of the resulting torque ratio is implemented with the aid of the control unit (34).

7. Method according to one of the preceding claims, **characterized in that** the resulting torque ratio between the drive shaft (24) and the output shaft (26) lies between the torque ratio of the first part train (12) and the torque ratio of the second part train (14) .

8. Method according to one of the preceding claims, **characterized by** the method steps

a) selection of a specific first gear step in the first part train (12) of the transmission;
b) selection of a specific second gear step in the second part train (14) of the transmission;
c) coordinated activation of the clutches (16, 18) in such a way that the clutches (16, 18) transfer torques simultaneously, and the resulting torque ratio between the drive shaft (24) and the output shaft (26) is implemented continuously.

9. Method according to one of the preceding claims, **characterized in that** the resulting torque ratio corresponds to a resulting rotational speed ratio between the drive shaft (24) and the output shaft (26) which can be set via the activation of the clutches (16, 18) with the aid of the control unit (34), taking into account current driving parameters.

10. Method according to one of the preceding claims, **characterized in that** a specific resulting torque ratio for the avoidance of undesirable wheel slip is implemented.

11. Transmission control unit for the actuation of two clutches (16, 18) transmitting torque in parallel in the drive train of a motor vehicle (1) and having in each case different following fixed rotational speed ratios as gear steps between a drive shaft (24) and an output shaft (26) during an acceleration operation, in particular a starting operation, of the motor vehicle (1), wherein the method according to one of Claims 1 to 10 is carried out, **characterized in that** the transmission control unit has means for activating the two clutches (16, 18) in such a way that the two clutches (16, 18) transfer torques simultaneously and therefore a resulting torque ratio between the drive shaft (24) and the output shaft (26) is implemented continuously.

12. Transmission control unit according to Claim 11, **characterized in that** the period of time provided for the application of the resulting torque ratio is a timespan of at least 300 ms.

**Revendications**

1. Procédé pour actionner au moins deux accouplements (16, 18) transmettant un couple en parallèle dans la chaîne cinématique (10) d'un véhicule automobile, ayant respectivement des rapports de vitesse fixes (11, 12) différents en tant que niveaux de rapports (20, 22) entre un arbre d'entraînement (24) et un arbre de sortie (26), dans lequel, lors d'un processus d'accélération, en particulier d'un processus de démarrage du véhicule automobile, les deux accouplements (16, 18) sont commandés de telle sorte que les deux accouplements (16, 18) transmettent simultanément des couples et qu'il en résulte une conversion de couple continue entre l'arbre d'entraînement (24) et l'arbre de sortie (26), dans lequel, pendant la totalité du processus de démarrage, la vitesse ($\omega$1) de l'arbre d'entraînement (24) est supérieure à la vitesse respective ($\omega$31 ou $\omega$32) de l'arbre d'entrée de transmission respectif de la partie de chaîne cinématique respective (12, 14) côté secondaire de l'accouplement respectif (16, 18) ou pendant un processus d'accélération, la vitesse ($\omega$1) de l'arbre d'entraînement (24) est supérieure ou égale à la vitesse respective ($\omega$31 ou $\omega$32) de l'arbre d'entrée de transmission respectif de la partie chaîne cinématique (12, 14) côté secondaire de l'accouplement respectif (16, 18),

dans lequel le rapport de couple résultant est fourni sous la forme d'un rapport de couple réglable et le rapport de couple est réglable par l'intermédiaire de fonctions de commande, dans lequel, lors d'un processus d'accélération, en particulier d'un processus de démarrage du véhicule automobile, la capacité d'accouplement de l'accouplement respectif (16, 18) est utilisée en tant que grandeur d'actionnement pour réguler la vitesse ($\omega$1) au niveau de l'arbre d'entraînement (24) et/ou pour réguler le couple de sortie (M4) dans la boucle de régulation prévue à cet effet, pour pouvoir commander, d'une part, la vitesse du moteur et, d'autre part, le couple de sortie sans que cela soit nécessairement associé à une modification de l'autre variable respective, à savoir qu'au moins pendant un intervalle de temps prédéterminé, le processus est essentiellement réalisé en maintenant constant le couple de sortie (M4), à savoir que la vitesse ($\omega$1) de l'arbre d'entraînement (24) ou du moteur (28) est commandée sans modification du couple de sortie (M4),

**caractérisé en ce que** le rapport de couple est ajusté de telle manière que l'accouplement correspondant (16 ou 18) ne transmet plus de couple pour une vitesse synchrone d'un rapport (20 ou 22) et qu'à cet instant le rapport suivant peut être engagé sur cette partie de chaîne cinématique, dans lequel la capacité de l'accouplement actif (16 ou 18) est ensuite transférée en continu à l'autre accouplement (16 ou 18) et donc au nouveau rapport.

2. Procédé selon la revendication 1, **caractérisé en ce que** le processus de démarrage s'effectue essentiellement en maintenant constant le couple moteur.

3. Procédé selon l'une des revendications 1 à 2, **caractérisé en ce qu'**une période de temps d'au moins 300 ms est prévue en tant qu'intervalle de temps d'application du procédé.

4. Procédé selon l'une des revendications précédentes, **caractérisé en ce que** la commande de chacun des deux accouplements (16, 18) est réalisée à l'aide d'une unité de commande (34).

5. Procédé selon l'une des revendications précédentes, **caractérisé en ce que** la commande de chacun des deux accouplements (16, 18) est effectuée par l'intermédiaire d'une courbe caractéristique et **en ce que** chaque courbe caractéristique est calculée en tenant compte de paramètres de conduite actuels.

6. Procédé selon l'une des revendications 4 ou 5, **caractérisé en ce qu'**une commande commune du couple moteur et du rapport de couple résultant est réalisée à l'aide de l'unité de commande (34).

7. Procédé selon l'une des revendications précédentes, **caractérisé en ce que** le rapport de couple résultant entre l'arbre d'entrée (24) et l'arbre de sortie (26) se situe entre le rapport de couple de la première partie de chaîne cinématique (12) et le rapport de couple de la deuxième partie de chaîne cinématique (14).

8. Procédé selon l'une des revendications précédentes, **caractérisé par** les étapes suivantes :

   a) engager un premier rapport déterminé dans la première partie de chaîne cinématique (12) de la transmission ;
   b) engager un deuxième rapport déterminé dans la deuxième partie de chaîne cinématique (14) de la transmission ;
   c) commander de manière coordonnée les accouplements (16, 18) de telle sorte que les accouplements (16, 18) transmettent simultanément des couples et qu'il en résulte une conversion de couple continue entre l'arbre d'entraînement (24) et l'arbre de sortie (26).

9. Procédé selon l'une des revendications précédentes, **caractérisé en ce que** le rapport de couple résultant correspond à un rapport de vitesse résultant entre l'arbre d'entraînement (24) et l'arbre de sortie (26), qui peut être réglé en commandant les accouplements (16, 18) à l'aide de l'unité de commande (34) en tenant compte de paramètres de conduite actuels.

10. Procédé selon l'une des revendications précédentes, **caractérisé en ce qu'**un rapport de couple résultant déterminé est réalisé pour éviter un patinage indésirable des roues.

**11.** Commande de transmission pour actionner deux accouplements (16, 18) transmettant un couple en parallèle dans la chaîne cinématique d'un véhicule automobile (1), ayant respectivement des rapports de vitesse fixes successifs différents en tant que niveaux de rapports entre un arbre d'entraînement (24) et un arbre de sortie (26) lors d'un processus d'accélération, en particulier d'un processus de démarrage du véhicule automobile (1), dans lequel le procédé selon l'une des revendications 1 à 10 est mis en oeuvre, **caractérisé en ce que** la commande de transmission comprend des moyens destinés à commander les deux accouplements (16, 18) de telle sorte que les deux accouplements (16, 18) transmettent simultanément des couples et qu'il en résulte une conversion de couple continue entre l'arbre d'entraînement (24) et l'arbre de sortie (26).

**12.** Commande de transmission selon la revendication 11, **caractérisée en ce qu'**une période de temps d'au moins 300 ms est prévue en tant qu'intervalle de temps d'application du rapport de couple résultant.

FIG. 1

FIG. 2a

FIG. 2b

FIG. 2c

**EP 1 718 511 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10156940 A
- DE 3543498 A1
- DE 19939334 A1